# FASCICULE DE BREVET EUROPEEN

(11) **EP 2 810 842 B1**
(45) Date de publication et mention de la délivrance du brevet: **03.04.2019**
(21) Numéro de dépôt: 14354010.2
(22) Date de dépôt: 15.05.2014
(51) Int. Cl.: B61B 12/00

(54) **Dispositif de maintenance et installation de transport par câble aérien, notamment un télésiège ou télécabine, comprenant un tel dispositif**
Wartungsvorrichtung und Seilschwebe-Transportanlage, insbesondere Sessellift oder Gondelbahn, die eine solche Vorrichtung umfasst
Maintenance device and overhead cable transport system, in particular a chairlift or cable-car, comprising such a device

(30) Priorité: 05.06.2013 FR 1301280
(43) Date de publication de la demande: 10.12.2014
(73) Titulaire: POMA, 38340 Voreppe (FR)
(72) Inventeur: Darier, Guillaume, F-38760 Varces-Allières-et-Risset (FR); Drogo, Jean-Philippe, F-38380 Saint-Christophe-sur-Guiers (FR)
(74) Mandataire: Talbot, Alexandre

(56) Documents cités:
- JP-A- 2007 261 547

## Description

### Domaine technique de l'invention

L'invention concerne la maintenance des installations de transport par câble aérien, en particulier des télésièges et des télécabines.

### État de la technique

Une installation de transport par câble aérien, tels un télésiège et une télécabine, comprend classiquement une pluralité de véhicules accrochés à un câble aérien mobile pouvant être de type tracteur ou tracteur-porteur. Les véhicules se déplacent généralement le long de deux voies respectivement aller et retour, et cheminent tous sur une trajectoire identique en boucle fermée.

Classiquement le câble aérien permet aux véhicules de se rendre d'une station de départ à une station d'arrivée. Entre ces stations, le câble est maintenu à distance du sol par l'intermédiaire de pylônes permettant notamment d'adapter la pente du câble au relief parcouru par l'installation.

Actuellement, les pylônes des téléphériques nécessitent d'être contrôlés régulièrement pour sécuriser le transport des personnes. Les opérateurs de maintenance interviennent directement sur les pylônes. Pour effectuer ses opérations de maintenance et ou réparation, l'opérateur doit être amené à l'aplomb du pylône concerné.

Des opérations de maintenance peuvent être nécessaires au niveau des galets qui équipent ces pylônes et qui permettent de guider le câble aérien. Il résulte donc un besoin d'accéder au sommet de ces pylônes.

Les pylônes sont généralement équipés d'une échelle pour accéder à une passerelle fixée au sommet du pylône et agencée pour permettre l'accès aux galets. La maintenance utilisant ces échelles est fastidieuse. Par ailleurs, certains pylônes sont difficiles d'accès.

Pour accéder aux pylônes, on peut utiliser des véhicules spécifiques de maintenance accouplés au câble aérien mobile pour être déplacés vers un pylône sur lequel on souhaite intervenir. Ces véhicules spécifiques comprennent une nacelle de maintenance fixée sur une suspente accrochée au câble aérien. La nacelle comprend également une échelle et une passerelle qui sont fixées à la suspente. Mais ces véhicules spécifiques doivent être décrochés du câble lorsqu'on souhaite utiliser l'installation en situation normale. Par ailleurs, ces véhicules sont lourds, encombrants et difficiles à stocker.

On peut également citer la demande de brevet japonais JP2007-261547 qui divulgue un dispositif de secours pour une installation de transport par câble aérien, comprenant une plate-forme configurée pour supporter un opérateur de maintenance et circulant sur une ligne spécifique parallèle à la ligne principale de l'installation. Mais un tel dispositif de secours est complexe car il nécessite de monter une ligne de transport spécifique pour son transport.

### Objet de l'invention

L'objet de l'invention consiste à remédier à ces inconvénients, et plus particulièrement à fournir un moyen simple pour effectuer des opérations de maintenance en hauteur au niveau du câble aérien d'une installation de transport.

Selon un aspect de l'invention, il est proposé un dispositif de maintenance d'une installation de transport par câble aérien, notamment un télésiège ou télécabine, l'installation comprenant un véhicule pourvu d'un moyen d'accrochage configuré pour accrocher le véhicule au câble aérien, le dispositif comprenant :
- une plate-forme configurée pour supporter un opérateur de maintenance ;
- une échelle pour accéder à la plate-forme depuis le véhicule ; et
- un support de plate-forme configuré pour être monté fixe sur le moyen d'accrochage.

Le dispositif comporte en outre un support d'échelle configuré pour être monté amovible sur le moyen d'accrochage, la plate-forme est montée amovible sur le support de plate-forme, et l'échelle est montée amovible sur le support d'échelle.

Ainsi, on fournit un dispositif dont certains éléments sont démontables pour pouvoir s'adapter à tout type de véhicule d'un téléphérique. Un tel dispositif est léger et facile à stocker.

Le moyen d'accrochage peut comporter une suspente accrochée au câble aérien et un élément de liaison pour relier la suspente au véhicule, le support d'échelle étant configuré pour être monté amovible sur l'élément de liaison.

La plate-forme peut comporter des moyens de verrouillage destinés à coopérer avec des attaches prévues sur le support de plate-forme afin de maintenir la plate-forme en position sur le support de plate-forme.

Le support d'échelle peut comprendre au moins deux crochets destinés à recevoir un barreau de l'échelle.

L'installation peut être une télécabine, le véhicule est une cabine comportant un marchepied pourvu d'un orifice, et l'échelle comporte un doigt configuré pour s'introduire dans l'orifice.

L'installation peut être un télésiège, le véhicule est un siège muni d'un garde-corps, et le support d'échelle est configuré pour que l'échelle repose contre le garde-corps.

Selon un autre aspect de l'invention, il est proposé une installation de transport par câble aérien, notamment un télésiège ou télécabine, comprenant un dispositif de maintenance tel que défini ci-avant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement un mode de réalisation d'un dispositif de maintenance d'une installation de transport par câble aérien selon l'invention ;
- la figure 2, illustre de façon schématique un mode de réalisation d'un support de plate-forme ;
- la figure 3, illustre schématiquement un mode de réalisation d'une plate-forme ;
- la figure 4, illustre de façon schématique un mode de réalisation d'un support d'échelle ;
- la figure 5, illustre de façon schématique un mode de réalisation d'une échelle ; et
- les figures 6 à 8, illustrent schématiquement un autre mode de réalisation d'un dispositif de maintenance selon l'invention.

### Description détaillée

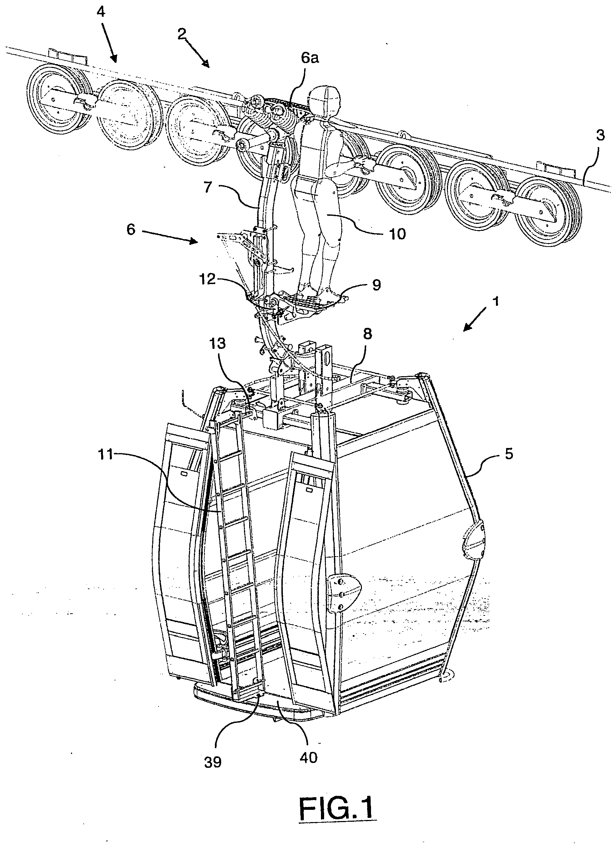

Sur la figure 1, on a représenté un dispositif de maintenance 1 d'une installation de transport 2 par câble aérien 3, notamment un télésiège ou télécabine.

L'installation de transport 2 comprend une station d'embarquement et une station de débarquement, non représentées ici à des fins de simplification. En outre, le câble aérien 3 est suspendu sur des pylônes, entre les deux stations, le long d'une trajectoire en boucle fermée. En particulier, les pylônes sont équipés de galets 4 qui sont en contact avec le câble aérien 3 pour le guider. Ces galets 4 nécessitent des opérations de maintenance qui s'effectuent nécessairement en hauteur.

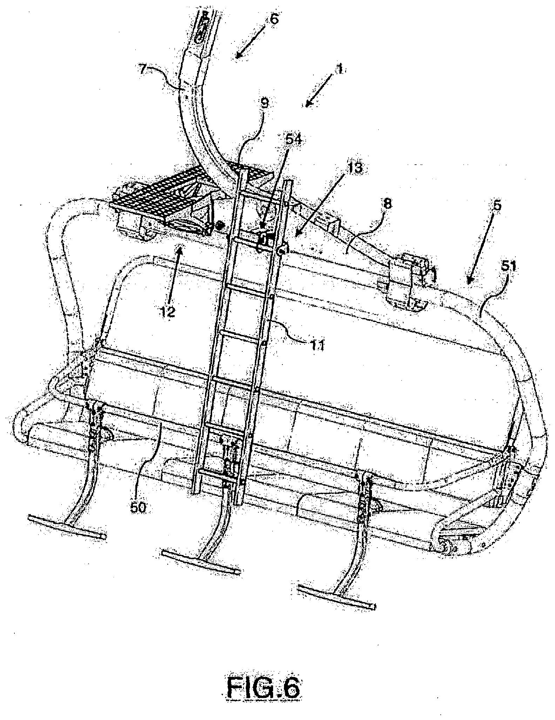

L'installation de transport 2 comporte plusieurs véhicules 5 pour transporter des passagers d'une station à l'autre. Chaque véhicule 5 est pourvu d'un moyen d'accrochage 6 configuré pour accrocher le véhicule 5 au câble aérien 3. Plus particulièrement, le moyen d'accrochage 6 comprend une pince 6a accrochée au câble aérien 3, une suspente 7 fixée à la pince 6a, et un élément de liaison 8 configuré pour relier la suspente 7 au véhicule 5. La pince 6a peut être accrochée au câble aérien 3 de manière fixe et dans ce cas l'installation de transport 2 est dite à pince fixe, ou de manière amovible et dans ce cas l'installation de transport 2 est dite débrayable. Le câble aérien 3 peut être tracteur ou tracteur-porteur. En tout état de cause, le câble aérien 3 est mobile pour déplacer les véhicules 5 d'une station à l'autre. Dans le cas d'une télécabine 2, les véhicules 5 sont des cabines, comme illustré sur la figure 1. Dans le cas d'un télésiège 2, les véhicules 5 sont des sièges, comme illustré sur la figure 6.

De manière générale, le dispositif de maintenance 1 comporte une plate-forme 9 configurée pour supporter un opérateur de maintenance 10, et une échelle 11 pour accéder à la plate-forme 9 depuis le véhicule 5. En outre, le dispositif 1 comprend un support de plate-forme 12 monté fixe sur le moyen d'accrochage 6. Plus particulièrement, le support de plate-forme 12 est à demeure sur le moyen d'accrochage 6, c'est-à-dire qu'il n'est pas configuré pour être démontable. Le support de plate-forme 12 est fixé au véhicule 5 de manière à garantir un maintien du support 12 sur le véhicule 5, et offrir une sécurité renforcée. Le dispositif de maintenance 1 comporte également un support d'échelle 13 monté amovible sur le moyen d'accrochage 6, c'est-à-dire que le support d'échelle 13 peut être monté, puis démonté, en fonction des besoins. Par ailleurs, la plate-forme 9 est configurée pour être montée amovible sur le support de plate-forme 12 et l'échelle 11 est configurée pour être montée amovible sur le support d'échelle 13. La plate-forme 9 et l'échelle 11 sont des éléments amovibles qui peuvent être montés et démontés sur le véhicule 5. De préférence, le support de plate-forme 12 et le support d'échelle 13 sont montés sur le moyen d'accrochage 6 du véhicule 5. Ainsi, on peut fournir un dispositif de maintenance qui est adapté à tout type de véhicule 5 de l'installation de transport 2, et en particulier à une cabine ou un siège. Un tel dispositif 1 est léger et peu encombrant et ne nécessite pas d'accrocher un véhicule de maintenance spécifique au câble aérien 3.

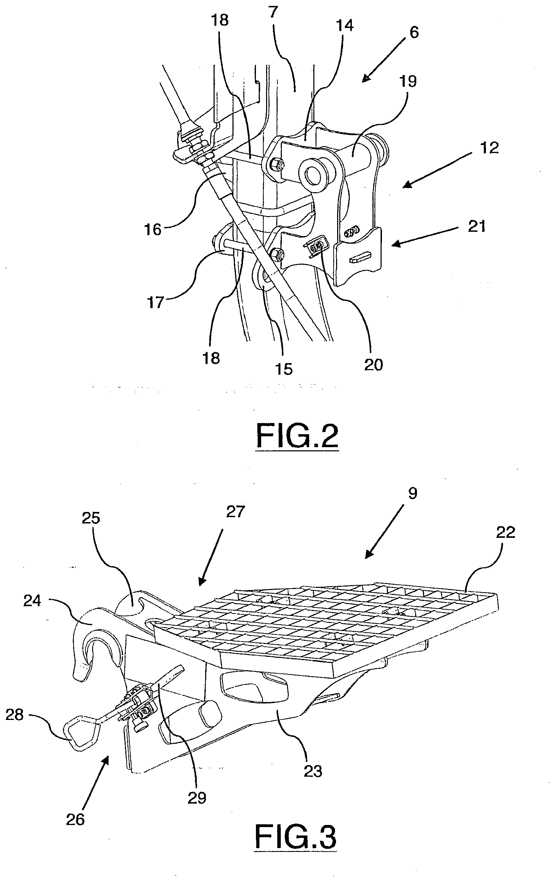

Sur les figures 1 à 5, on a représenté un mode de réalisation du dispositif de maintenance 1 adapté à une cabine 5 d'une télécabine 2. Dans ce mode de réalisation, le support d'échelle 13 est monté amovible sur l'élément de liaison 8 du moyen d'accrochage 6. Le support de plate-forme 12 est, quant à lui, monté fixe sur la suspente 7, comme illustré aux figures 1 et 2. Le support de plate-forme 12 est fixé à la suspente 7 par l'intermédiaire d'une première paire de plaques 14, 15 et d'une deuxième paire de plaques 16, 17, les paires de plaques étant situées de part et d'autre de la suspente 7 et maintenues plaquées contre la suspente 7 par des vis 18. En outre, le support de plate-forme 12 comporte un élément cylindrique 19, de préférence tubulaire. Avantageusement, le support de plate-forme 12 comporte des attaches 20, 21 pour permettre un verrouillage de la plate-forme 9 lorsqu'elle est montée sur le support de plate-forme 12. Sur la figure 3, on a représenté un mode de réalisation d'une plate-forme 9 adaptée au support de plate-forme 12 décrit à la figure 2. La plate-forme 9 comprend une grille 22 pour accueillir au moins un opérateur de maintenance 10, la grille 22 étant fixée à un support de grille 23. Le support de grille 23 comporte deux crochets 24, 25 qui coopèrent avec l'élément cylindrique 19 du support de plate-forme 12 lorsqu'on monte la plate-forme 9 sur le support de plate-forme 12. Avantageusement, la plate-forme 9 comporte des moyens de verrouillage 26, 27 qui coopèrent respectivement avec les attaches 20, 21 lorsqu'on souhaite verrouiller la plate-forme 9 sur le support de plate-forme 12. Par exemple, les moyens de verrouillage 26, 27 comportent, chacun, un anneau 28 destiné à entourer une attache 20, 21 et un levier 29 pivotant. Lorsque le levier 29 est dans une première position, l'anneau 28 entoure l'attache 20, puis on pivote le levier 29 dans une deuxième position pour verrouiller le moyen de verrouillage 26. Ainsi, les moyens de verrouillage 26, 27 permettent de maintenir la plate-forme 9 en position sur le support de plate-forme 12.

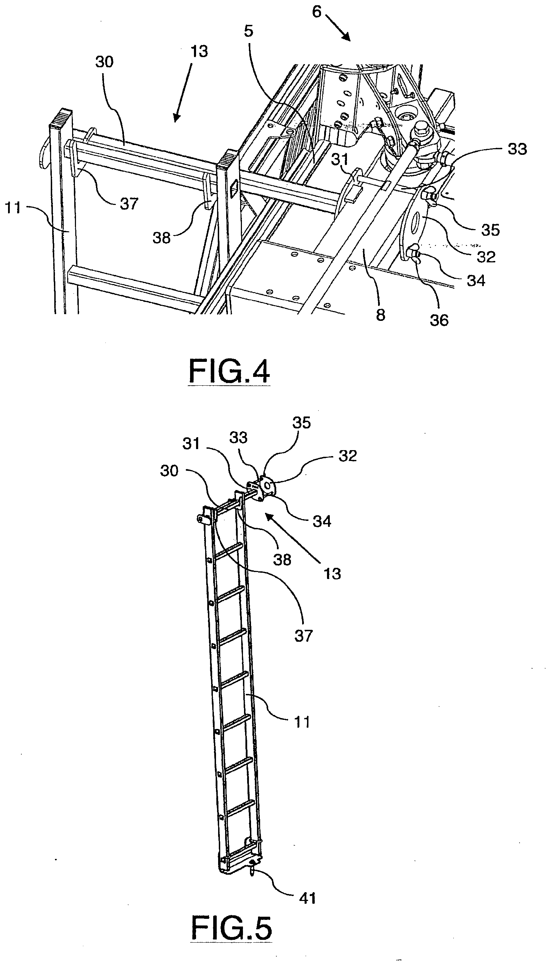

Sur la figure 4, on a représenté un mode de réalisation d'un support d'échelle 13 adapté à une cabine 5. Le support d'échelle 13 comporte une barre 30 ayant une première plaque 31 à une extrémité. La première plaque 31 est posée contre l'élément de liaison 8 qui est fixé sur le toit de la cabine 5. La première plaque 31 est maintenue montée sur l'élément de liaison 8 par une deuxième plaque 32, au moins deux tiges filetées 33, 34 et au moins deux écrous à oreille 35, 36. Les deux écrous à oreille 35, 36 coopèrent avec les tiges filetées 33, 34 de manière à maintenir les première et deuxième plaques 31, 32 serrées autour de l'élément de liaison 8 de la cabine 5. De préférence, chaque tige filetée 33, 34 est soudée à l'une des première ou deuxième plaques 31, 32. La barre 30 comporte au moins deux crochets 37, 38 destinés à recevoir un barreau de l'échelle 11. On peut également prévoir un orifice 39 sur un marchepied 40 de la cabine 5, et l'échelle 11 peut comprendre à une extrémité un doigt 41 configuré pour s'introduire dans l'orifice 39. Le doigt 41 permet de stabiliser l'échelle 11 lorsqu'on la monte sur le support d'échelle 13. En particulier, la barre 30 est montée en saillie de la cabine 5 de façon à pouvoir positionner l'échelle 11 en appui sur le marchepied 40 de la cabine 5. Ainsi, le dispositif 1 est adapté pour faciliter l'accès à la plate-forme 9.

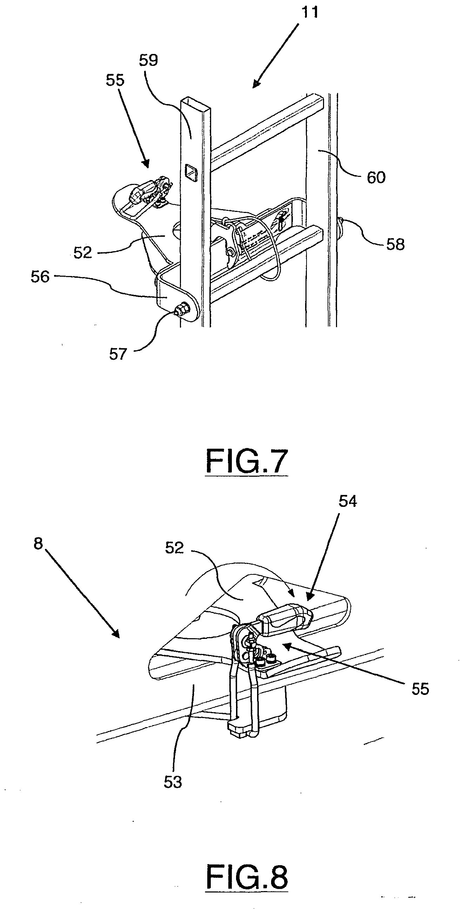

Sur les figures 6 à 8, on a représenté un autre mode de réalisation dans lequel le véhicule 5 est un siège et l'installation de transport 2 est un télésiège. Le siège 5 comporte un garde-corps 50 pivotant, et une structure tubulaire 51 fixée à l'élément de liaison 8 du moyen d'accrochage 6. Dans cet autre mode de réalisation, le support de plate-forme 12 est fixé à l'élément de liaison 8, et le support d'échelle 13 est monté amovible sur l'élément de liaison 8. L'élément de liaison 8 est, dans cet autre mode de réalisation, le palonnier du siège 5. Sur les figures 7 et 8, on a représenté schématiquement un mode de réalisation du support d'échelle 13 adapté au véhicule 5 illustré à la figure 6. En particulier, la figure 7 est une vue avant du support d'échelle 13 démonté, et la figure 8 est une vue arrière du support d'échelle 13 monté sur l'élément de liaison 8. Le support d'échelle 13 comprend une pince 52 qui vient serrer une barre transversale 53 du palonnier 8. La pince 52 entoure la barre transversale 53 en étant introduite par une ouverture 54 prévue sur le palonnier 8, au dessus de la barre transversale 53. Avantageusement, la pince 52 comporte des moyens de verrouillage additionnels 55 qui maintiennent le support d'échelle 13 en position sur le palonnier 8. Par ailleurs, la pince 52 comporte une mâchoire 56 en forme de U pour recevoir l'échelle 11. L'échelle 11 est montée amovible sur le support d'échelle 13, par l'intermédiaire de vis 57, 58 qui traversent les deux extrémités de la mâchoire 56 et deux montants principaux 59, 60 de l'échelle 11 de façon à maintenir l'échelle 11 en position sur le support d'échelle 11. Dans le mode de réalisation illustré à la figure 6, une première extrémité de l'échelle 11 est montée amovible sur le support d'échelle 13 et la deuxième extrémité de l'échelle 11 repose contre le garde-corps 50.

Lorsque le dispositif 1 est monté sur le véhicule 5, on amène l'opérateur de maintenance vers la zone d'intervention où doit s'effectuer l'opération de maintenance, par exemple à l'aplomb d'un pylône. Une fois que l'opérateur 10 arrive à l'aplomb du pylône concerné, il chemine via le dispositif 1 pour atteindre le pylône et pour réaliser son opération de maintenance et ou réparation.

De façon générale, on installe sur un véhicule 5, par exemple une cabine ou un siège, le dispositif de maintenance 1 pour effectuer des opérations de maintenance dans une zone d'intervention qui est par exemple le sommet d'un pylône. En particulier, lors d'une première étape de fixation, on fixe, sur le moyen d'accrochage 6, le support de plate-forme 12. Cette étape peut être réalisée directement en usine lors de la fabrication des véhicules 5. Puis, lors d'une deuxième étape, on monte la plate-forme 9 amovible sur le support de plate-forme 12 et le support d'échelle 13 amovible sur le moyen d'accrochage 6. La deuxième étape est généralement effectuée dans la station d'embarquement ou de débarquement, de préférence lorsque le véhicule 5 est à l'arrêt. Puis, on déplace le véhicule 5 vers la zone d'intervention et on monte l'échelle 11 amovible sur le support d'échelle 13. Lorsque le dispositif de maintenance 1 est mis en place sur le véhicule 5, l'opérateur 10 peut accéder à la zone d'intervention en quittant le véhicule 5 et en se déplaçant sur la plate-forme 9 en empruntant l'échelle 11 ainsi disposée.

En particulier, lorsque le véhicule 5 est une cabine d'une télécabine 2, après la deuxième étape, l'opérateur de maintenance 10 embarque à l'intérieur de la cabine avec l'échelle 11 démontée. Puis on déplace le véhicule 5 jusqu'à la zone d'intervention. Lorsque le véhicule 5 arrive à l'aplomb de la zone d'intervention, on arrête le véhicule 5. Ensuite, l'opérateur 10 monte l'échelle 11 sur le support d'échelle 13. En particulier, lors de cette étape de montage de l'échelle 11, on introduit le doigt 41 dans l'orifice 40 pour maintenir l'échelle 11 sur le support d'échelle 13.

Lorsque le véhicule 5 est un siège d'un télésiège 2, après la deuxième étape, on monte l'échelle 11 sur le support d'échelle 13 et l'opérateur 10 embarque sur le véhicule 5 en s'asseyant sur le siège. Lorsque l'échelle 11 est montée sur le siège 5, le garde-corps 50 n'est plus opérationnel. De préférence, le garde-corps 50 doit demeurer en position baissée pendant toute la durée de l'opération

Puis on déplace le véhicule 5 vers la zone d'intervention. Selon un autre mode de mise en oeuvre, l'opérateur 10 peut embarquer sur le siège avec l'échelle 11 démontée avant de déplacer le véhicule 5, puis l'opérateur monte S4 l'échelle 11 sur le support après avoir déplacé le véhicule 5 vers la zone d'intervention.

Le dispositif et le procédé de maintenance proposés permettent d'effectuer des opérations de maintenance rapidement, en particulier sur des pylônes dépourvus de passerelles fixes ou difficiles d'accès par l'échelle qui est fixée au pylône.

## Revendications

1. Dispositif de maintenance d'une installation de transport par câble aérien, notamment un télésiège ou télécabine, l'installation comprenant un véhicule (5) pourvu d'un moyen d'accrochage (6) configuré pour accrocher le véhicule (5) au câble aérien, le dispositif comprenant :
- une plate-forme (9) configurée pour supporter un opérateur de maintenance (10) ;
- une échelle (11) pour accéder à la plate-forme (9) depuis le véhicule (5) ; et
- un support de plate-forme (12) configuré pour être monté fixe sur le moyen d'accrochage (6) ;
**caractérisé en ce que** :
- la plate-forme (9) est montée amovible sur le support de plate-forme (12) ;
- le dispositif comporte en outre un support d'échelle (13) configuré pour être monté amovible sur le moyen d'accrochage (6) ; et
- l'échelle (11) est montée amovible sur le support d'échelle (13).

2. Dispositif selon la revendication 1, dans lequel le moyen d'accrochage (6) comporte une suspente (7) accrochée au câble aérien et un élément de liaison (8) pour relier la suspente (7) au véhicule (5), le support d'échelle (13) étant configuré pour être monté amovible sur l'élément de liaison (8).

3. Dispositif selon la revendication 1 ou 2, dans lequel la plate-forme (9) comporte des moyens de verrouillage (26, 27) destinés à coopérer avec des attaches (20, 21) prévues sur le support de plate-forme (12) afin de maintenir la plate-forme en position sur le support de plate-forme (12).

4. Dispositif selon l'une des revendications 1 à 3, dans lequel le support d'échelle (13) comprend au moins deux crochets (37, 38) destinés à recevoir un barreau de l'échelle (11).

5. Dispositif selon l'une des revendications 1 à 4, dans lequel l'installation est une télécabine, le véhicule (5) est une cabine comportant un marchepied (40) pourvu d'un orifice (39), et l'échelle (11) comporte un doigt (41) configuré pour s'introduire dans l'orifice (39).

6. Dispositif selon l'une des revendications 1 à 4, dans lequel l'installation est un télésiège, le véhicule (5) est un siège muni d'un garde-corps (50), et le support d'échelle (13) est configuré pour que l'échelle (11) repose contre le garde-corps (50).

7. Installation de transport par câble aérien, notamment un télésiège ou télécabine, comprenant un dispositif de maintenance selon l'une des revendications 1 à 6.

## Patentansprüche

1. Vorrichtung zur Wartung einer Transportanlage mit Luftseil, insbesondere eines Sessellifts oder einer Gondelbahn, wobei die Anlage ein Fahrzeug (5) aufweist, das mit einem Einhängemittel (6) versehen ist, das konfiguriert ist, um das Fahrzeug (5) an dem Luftseil einzuhängen, wobei die Vorrichtung aufweist:
- eine Plattform (9), die konfiguriert ist, um einen Wartungsarbeiter (10) zu tragen,
- eine Leiter (11), um die Plattform (9) vom Fahrzeug (5) aus zu betreten, und
- eine Plattformhalterung (12), die konfiguriert ist, um an dem Einhängemittel (6) fest angebracht zu werden,
**dadurch gekennzeichnet, dass**:
- die Plattform (9) auf der Plattformhalterung (12) abnehmbar befestigt ist,
- wobei die Vorrichtung ferner eine Leiterhalterung (13) aufweist, die konfiguriert ist, um an dem Einhängemittel (6) abnehmbar befestigt zu werden, und
- die Leiter (11) an der Leiterhalterung (13) abnehmbar befestigt ist.

2. Vorrichtung nach Anspruch 1, wobei das Einhängemittel (6) eine Aufhängung (7), die an dem Luftseil aufgehängt ist, und ein Verbindungselement (8) aufweist, um die Aufhängung (7) mit dem Fahrzeug (5) zu verbinden, wobei die Leiterhalterung (13) konfiguriert ist, um an dem Verbindungselement (8) abnehmbar befestigt zu werden.

3. Vorrichtung nach Anspruch 1 oder 2, wobei die Plattform (9) Verriegelungsmittel (26, 27) aufweist, die dazu bestimmt sind, mit Befestigungselementen (20, 21) zusammenzuwirken, die auf der Plattformhalterung (12) vorgesehen sind, um die Plattform auf der Plattformhalterung (12) in Position zu halten.

4. Vorrichtung nach einem der Ansprüche 1 bis 3, wobei die Leiterhalterung (13) mindestens zwei Haken (37, 38) aufweist, die dazu bestimmt sind, eine Sprosse der Leiter (11) aufzunehmen.

5. Vorrichtung nach einem der Ansprüche 1 bis 4, wobei die Anlage eine Gondelbahn ist, das Fahrzeug (5) eine Kabine ist, die ein Trittbrett (40) aufweist, das mit einer Öffnung (39) versehen ist, und die Leiter (11) einen Finger (41) aufweist, der konfiguriert ist, um in die Öffnung (39) eingeführt zu werden.

6. Vorrichtung nach einem der Ansprüche 1 bis 4, wobei die Anlage ein Sessellift ist, das Fahrzeug (5) ein Sitz ist, der mit einem Sicherheitsbügel (50) versehen ist, und die Leiterhalterung (13) konfiguriert ist, damit die Leiter (11) an dem Sicherheitsbügel (50) anliegt.

7. Transportanlage mit Luftseil, insbesondere ein Sessellift oder eine Gondelbahn, umfassend eine Vorrichtung zur Wartung nach einem der Ansprüche 1 bis 6.

## Claims

1. Device for maintaining a aerial cableway installation, especially a chairlift or a gondola cableway, the installation comprising a vehicle (5) provided with a coupling means (6) configured so as to coupled the vehicle (5) to the aerial cable, the device comprising:
- a platform (9) configured so as to support a maintenance operator (10);
- a ladder (11) for reaching the platform (9) from the vehicle (5); and
- a platform support (12) configured so as to be fixedly mounted on the coupling means (6);
**characterized in that** :
- the platform (9) is removably mounted on the platform support (12);
- the device further comprises a ladder support (13) configured so as to be removably mounted on the coupling means (6), and
- the ladder (11) is removably mounted on the ladder support (13).

2. Device according to claim 1, wherein the coupling means (6) comprises a suspension post (7) coupled to the aerial cable and a connecting element (8) for connecting the suspension post (7) to the vehicle (5), the ladder support (13) being configured so as to be removably mounted on the connecting element (8).

3. Device according to claim 1 or 2, wherein the platform (9) comprises locking means (26, 27) for cooperating with fasteners (20, 21) provided on the platform support (12) in order to maintain the platform in position on the platform support (12).

4. Device according to one of claims 1 to 3, wherein the ladder support (13) comprises at least two hooks (37, 38) for receiving a rung of the ladder (11).

5. Device according to one of claims 1 to 4, wherein the installation is a gondola cableway, the vehicle (5) is a gondola comprising a step (40) provided with an opening (39), and the ladder (11) comprises a finger (41) configured so as to be insertable into the opening (39).

6. Device according to one of claims 1 to 4, wherein the installation is a chairlift, the vehicle (5) is a chair provided with a safety bar (50), and the ladder support (13) is configured so that the ladder (11) bears against the safety bar (50).

7. Aerial cableway installation, in particular a chairlift or gondola, comprising a maintenance device according to any one of the claims 1 to 6.
